(19) Europäisches Patentamt
European Patent Office
Office européen des brevets

(11) Veröffentlichungsnummer: **0 302 341 B1**

(12) **EUROPÄISCHE PATENTSCHRIFT**

(45) Veröffentlichungstag der Patentschrift: **06.05.92**

(51) Int. Cl.[5]: **C07C 271/62**, C08G 18/78, C08G 18/71

(21) Anmeldenummer: **88111937.4**

(22) Anmeldetag: **25.07.88**

(54) **Isocyanato-acylurethane, Verfahren zu ihrer Herstellung und ihre Verwendung.**

(30) Priorität: **06.08.87 DE 3726050**

(43) Veröffentlichungstag der Anmeldung:
**08.02.89 Patentblatt 89/06**

(45) Bekanntmachung des Hinweises auf die Patenterteilung:
**06.05.92 Patentblatt 92/19**

(84) Benannte Vertragsstaaten:
**AT BE CH DE ES FR GB IT LI NL SE**

(56) Entgegenhaltungen:
**FR-A- 1 580 013**
**GB-A- 994 890**
**US-A- 3 492 332**
**US-A- 3 531 509**

(73) Patentinhaber: **BAYER AG**
**W-5090 Leverkusen 1 Bayerwerk(DE)**

(72) Erfinder: **Schäfer, Walter, Dr.**
**In den Weiden 25**
**W-5653 Leichlingen(DE)**
Erfinder: **Müller, Hanns-Peter, Dr.**
**Weizenfeld 36**
**W-5060 Bergisch-Gladbach 2(DE)**
Erfinder: **Hassel, Tillmann, Dr.**
**Morgengraben 14**
**W-5000 Köln 80(DE)**

EP 0 302 341 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Isocyanato-acylurethane, ein Verfahren zu ihrer Herstellung durch Umsetzung von Isocyanato-carbonsäurechloridenmit Carbamidsäureestern und ihre Verwendung als Zwischenprodukte zur Herstellung von thermisch vernetzbaren Kunststoffen bzw. Kunststoff-Vorläufern oder von Vernetzern für Kunststoffe.

Die Herstellung von Acylurethanen aus Carbonsäurechloriden und Carbamidsäureestern, sowie deren Vernetzung in der Hitze mit Polyhydroxylverbindungen ist bekannt (DE-AS 1 081 460, DE-OS 2 633 385, Houben-Weyl, (1983), E 4, Seite 230).

Überraschenderweise wurde jetzt gefunden, daß diese Umsetzung auch mit Isocyanato-carbonsäurechloriden unter selektiver Reaktion der Carbonsäurechloridgruppen mit den Carbamidsäureestern möglich ist. Dieser Befund muß als überraschend bezeichnet werden, da zu erwarten war, daß eine selektive Reaktion wegen der Anwesenheit der hochreaktiven Isocyanatgruppe nicht möglich ist.

Die als Umsetzungsprodukte der selektiven Reaktion resultierenden erfindungsgemäßen Isocyanato-acylurethane stellen vielseitig verwertbare Zwischenprodukte, insbesondere zur Herstellung von thermisch vernetzbaren Kunststoffen bzw. Kunststoff-Vorläufern oder zur Herstellung von Vernetzern für Kunststoffe dar.

Gegenstand der Erfindung sind Isocyanato-acylurethane der allgemeinen Formel I

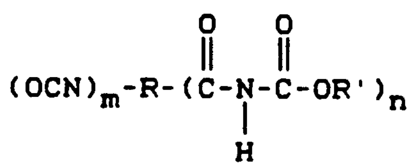

(I),

in der

- R für einen jeweils (m und n)-wertigen aliphatischen Kohlenwasserstoffrest mit 1 bis 18 Kohlenstoffatomen, cycloalkiphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 13 Kohlenstoffatomen steht,
- R′ für einen aliphatischen Kohlenwasserstoffrest, der gegebenenfalls Etherbrücken aufweisen kann, mit 1 bis 18 Kohlenstoffatomen, cycloaliphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 13 Kohlenstoff atomen steht, und
- m und n für gleiche oder vershiedene ganze Zahlen stehen und jeweils 1 oder 2 bedeuten.

Gegenstand der Erfindung ist auch ein Verfahren zur Herstellung dieser Isocyanato-acylurethane, welches dadurch gekennzeichnet ist, daß man Isocyanato-carbonsäurechloride der allgemeinen Formel II

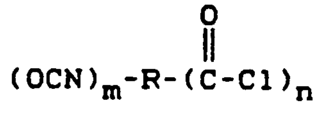

(II),

in der
R, m und n die obengenannte Bedeutung haben,
mit Carbamidsäureestern der allgemeinen Formel III

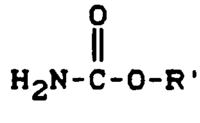

(III),

in der

R′ die obengenannte Bedeutung hat,

unter Einhaltung eines Molverhältnisses von Säurechloridgruppen zu Carbamidsäureestergruppen von 0,9:1 bis 1,1:1 innerhalb des Temperaturbereichs von 20 bis 140 ° C umsetzt.

Gegenstand der Erfindung ist auch die Verwendung der Isocyanato-acylurethane als Zwischenprodukt zur Herstellung von thermisch vernetzbaren Kunststoffen oder Kunststoff-Vorläufern.

Gegenstand der Erfindung ist schließlich auch die Verwendung der Isocyanato-acylurethane als Zwischenprodukt zur Herstellung von Vernetzern für Kunststoffe.

Ausgangsmaterialien für das erfindungsgemäße Verfahren sind Isocyanato-carbonsäurechloride der vorstehend genannten allgemeinen Formel II und Carbamidsäureester der vorstehend genannten allgemeinen Formel III.

In diesen Formel haben R, R′, m und n die vorstehend genannte Bedeutung. Vorzugsweise stehen

R für einen Alkylenrest mit 5 bis 11 Kohlenstoffatomen,

R′ für einen Alkylrest mit 1 bis 4 Kohlenstoffatomen oder einen Alkoxyalkylrest mit insgesamt 2 bis 6 Kohlenstoffatomen

und

m und n jeweils für 1.

Demzufolge entsprechen die bevorzugten erfindungsgemäßen Isocyanato-acylurethane der vorstehend genannten allgemeinen Formel I, wobei R, R′, m und n die zuletzt genannte Bedeutung haben.

Für das erfindungsgemäße Verfahren geeignete Isocyanatocarbonsäurechloride sind beispielsweise in der DE-AS 1 222 919 beschrieben. Bevorzugt werden 6-Isocyanatocapronsäurechlord, 11-Isocyanato-undecansäurechlorid, 4-Isocyanato-benzoylchloride, 3-Isocyanato-benzoylchlorid und 4-Isocyanato-phenylacetylchlorid.

Für das erfindungsgemäße Verfahren einzusetzende Ester der Caramidsäure sind beispielsweise in DE-AS 1 081 460 und DE-AS 1 249 426 beschrieben. Bevorzugt werden die Carbamidsäureester von Methanol, Ethanol, Propanol, Butanol, Glykolmonomethylether, Glykolmonoethylether, Glykolmonopropylether und Glykolmonobutylether, 2-Hydroxypropylpropylether und 2-Hydroxypropylbutylether.

Bei der Durchführung des erfindungsgemäßen Verfahrens kommen die Isocyanato-carbonsäurechloride und die Carbamidsäureester in solchen Mengen zum Einsatz, die einem Molverhältnis von Säurechloridgruppen zu Carbamidsäureestergruppen von 0,9:1 bis 1,1:1, vorzugsweise 1:1 entsprechen. Dies bedeutet, daß die Reaktionspartner vorzugsweise in äquivalenten Mengen miteinander zur Reaktion gebracht werden.

Die Reaktion kann sowohl in Substanz als auch in gegenüber Isocyanaten und Carbonsäurechloriden unter den Rekationsbedingungen inerten Lösungsmitteln durchgeführt werden, beispielsweise in Aromaten wie Toluol, Xylol oder chlorierten Aromaten wie Chlorbenzol, Dichlorbenzol, in Ether- bzw. Estergruppen enthaltenden Lösungsmitteln wie Tetrahydrofuran, Dioxan, Glykolmonomethyletheracetat oder Methoxypropylacetat oder auch in Dimethylformamid, N-Methylpyrrolidon oder N-Methylcaprolactam oder in Gemischen derartiger Lösungsmittel.

Besonders bevorzugt sind halogenierte Aromaten wie Chlorbenzol oder 1,2-Dichlorbenzol.

Die Reaktionstemperatur kann zwischen Raumtemperatur (20 ° C) und 140 ° C liegen, bevorzugt ist ein Temperaturbereich von 40 bis 100 ° C.

Die Umsetzung wird vorzugsweise in Gegenwart von katalytischen Mengen einer Lewis-Säure durchgeführt. Hierunter sind im Rahmen der Erfindung insbesondere wasserfreie Metallhalogenide, vorzugsweise Chloride des Zinks, Cadamiums, Bors, Aluminiums oder des dreiwertigen Eisens zu verstehen. Zinkchloride und Cadmiumchlorid sind die bevorzugten Katalysatoren. Unter "katalytischer Menge" ist im Rahmen der Erfindung eine Menge an Katalysator von 0,1 bis 10 Gew.-%, vorzugsweise 0,5 bis 3 Gw.-%, Katalysator, bezogen auf Gesamtgewicht der Säurechloride und Carbamidsäureester, zu verstehen.

Die Umsetzung kann auch in Abwesenheit derartiger Katalysatoren durchgeführt werden, falls durch Mitverwendung einer, dem gebildeten Chlorwasserstoff mindestens äquivalenten Menge einer Base dafür Sorge getragen wird, daß der abgespaltene Chlorwasserstoff als Hydrochlorid gebunden wird. Geeignete Basen sind beispielsweise Triethylamin, Tributylamin, Dimethylanilin, Pyridin, Collidin, Chinolin, Isochinolin oder Lutidin, Bevorzugte Basen sind Pyridin und Chinolin. Die katalytische Reaktion ist jedoch gegenüber der Umsetzung in Gegenwart von Basen bevorzugt. Im Falle der bevorzugten katalytischen Reaktion wird die gebildete Salzsäure durch Durchleiten von Inertgas aus dem Reaktionsgemisch entfernt.

Gemäß einer bevorzugten Ausführungsform des erfindungsgemäßen Verfahrens wird der Carbamidsäureester zusammen mit dem Katalysator in einer inerten Lösungsmittel vorgelegt und bei 40 bis 50 ° C die äquivalente Menge an Isocyanatocarbonsäurechlorid, gegebenenfalls gelöst im gleichen Lösungsmittel, zugetropft. Unter Einleiten von Stickstoff wird auf 60 bis 100 ° C erhitzt. Die Reaktion ist beendet, wenn

keine HCl-Entwicklung mehr auftritt und im IR-Spektrum des Reaktionsansatzes die Absorptionsbande des eingesetzten Säurechlorids verschwunden ist. Man zieht das Lösemittel ab und arbeitet in an sich bekannter Weise - beispielsweise durch Umkristallisation - auf.

Die erfindungsgemäße Umsetzung entspricht grundsätzlich der bekannten Acylierungsreaktion von Carbamidsäureestern mit Säurechloriden, wie sie in den eingangs zitierten Literaturstellen beschrieben ist.

Die erfindungsgemäßen Isocyanato-acylurethane stellen wertvolle Zwischenprodukte für den Kunststoff-Chemiker dar. Einerseits können die erfindungsgemäßen Verbindungen über die freie Isocyanatgruppe mit Hydroxylgruppen aufweisenden Verbindungen zu den entsprechenden Urethanen umgesetzt werden, und andererseits stellen die Acylurethan-Gruppierungen blockierte Reaktivgruppen dar, die beim Erhitzen wie Acylisocyanate reagieren und hierbei mit geeigneten Reaktionspartnern, insbesondere mit Hydroxylgruppen aufweisenden Verbindungen Vernetzungsreaktion eingehen.

Die erfindungsgemäßen Isocyanato-acylurethane eignen sich demzufolge beispielsweise zur Herstellung von thermisch vernetzbaren Einkomponenten-Systemem durch Umsetzung mit organischen Verbindungen mit mindestens zwei alkoholischen Hydroxylgruppen im OH/NCO-Verhältnis von 10:1 bis 2:1, vorzugsweise 5:1 bis 2:1, wobei diese Umsetzung beispielsweise in Lösung oder in Substanz bei 20° bis 120°C durchgeführt wird. Die resultierenden Umsetzungsprodukte weisen sowohl Acylurethan-Gruppierungen als auch freie Hydroxylgruppen auf und stellen demzufolge selbstvernetzende Kunststoffe bzw. Kunststoff-Vorläufer dar, die bei Temperaturen von 120 bis 180°C, vorzugsweise von 140 bis 170°C, thermisch unter Abspaltung der in den Isocyanato-acylurethanen vorliegenden Alkoholkomponente vernetzen. Geeignete Polyhydroxylverbindungen zur Herstellung derartiger selbstvernetzender Kunststoff-Vorläufer sind beispielsweise die aus der Polyurethanchemie bekannten Polyether- oder Polyesterpolyole.

Nach einem völlig analogen Prinzip können unter Verwendung der erfindungsgemäßen Isocyanato-acylurethane Vernetzer für Kunststoffe hergestellt werden, beispielsweise indem man die erfindungsgemäße Verbindungen mit mehrwertigen Alkoholen eines ungefähren Molekulargewichts von 100 bis 1.000, vorzugsweise 200 bis 400, unter Einhaltung eines OH/NCO-Verhältnisses von 1:1 umsetzt. Diese Umsetzungsprodukte enthalten dann selbstverständlich keine weiteren Hydroxylgruppen und sind nicht selbstvernetzend. Sie eignen sich jedoch als Vernetzer für andere Polyhydroxylverbindungen, beispielsweise für Polyether- oder Polyesterpolyole der aus derPolyurethanchemie an sich bekannten Art.

Durch Umsetzung der erfindungsgemäßen Isocyanato-acylurethane mit Hydroxylgruppen aufweisenden, olefinisch ungesättigten Verbindungen, beispielsweise mit (Meth)-acrylsäure-hydroxylalkylestern unter Einhaltung eines OH/NCO-Äquivalentverhältnisses von 1:1 entstehen olefinisch ungesättigte Monomere, die eine, thermischen Vernetzungsreaktionen zugängliche Acylurethangruppe aufweisen. Es handelt sich bei diesen Monomeren um Verbindungen, die sowohl einer radikalischen als auch einer thermischen Vernetzungsreaktion zugänglich sind. Sie eignen sich beispielsweise als Comonomere zur Herstellung von Polymerisaten mit eingebauten Acylurethangruppen, die, sofern sie freie Hydroxylgruppen aufweisen, selbstvernetzend sind, bzw. die, sofern sie selbst keine gegenüber Acylurethangruppen reaktionsfähigen Gruppen aufweisen, ihrerseits als Vernetzer entsprechend den oben gemachten Ausführungen verwendbar sind.

In den nachfolgenden Beispielen beziehen sich alle Prozentangaben auf Gewichtsprozente.

Beispiel 1 (Herstellungsbeispiel)

N-(6-Isocyanato-caproyl)-carbamidsäureethylester

89,2 g (1 mol) Ethylcarbamat werden zusammen mit 2 g Zinkchlorid in 750 ml Chlorbenzol vorgelegt. Bei 45°C tropft man 175 g (1 mol) 6-Isocyanatocapronsäurechlorid zu. Unter Rühren und Durchleiten von Stickstoff wird die Reaktionsmischung auf 60 bis 70°C erhitzt. Nach ca. 10 Stunden kommt die Chlorwasserstoffentwicklung zum Stillstand. Das Reaktionsgemisch wird am Rotationsverdampfer bei 60 bis 80°C vom Lösemittel befreit, wobei das Produkt in quantitativer Ausbeute kristallisiert.

Fp. : 85°C
IR (Nujol): 2250 (NCO) ; 1760; 1720; 1690 (Carbonylbanden) $cm^{-1}$

Beispiel 2 (Herstellungsbeispiel)

N-(6-Isocyanato-caproyl)-carbamidsäure-β-methoxyethylester

6,65 g (0,05 mol) Carbamidsäure-β-methoxyethylester und 0,15 g Zinkchlorid werden auf 50 °C erhitzt. Zu der entstandenen Schmelze tropft man 8,8 g (0,05 Mol) 6-Isocyanatocapronsäurechlorid. Man erhitzt unter Durchleiten von Stickstoff 3 Stunden auf 60 °C und dann 26 Stunden auf 100 °C. Danach ist die Umsetzung beendet (IR-Kontrolle). Man kühlt ab, nimmt in 100 ml Toluol auf, dekantiert vom Unlöslichen ab und entfernt das Toluol im Vakuum. Man erhält 11 g eines farblosen Öls, welches nach einiger Zeit wachsartig erstarrt.

| | |
|---|---|
| Ausbeute : | 11 g = 85 % |
| Fp. : | 77 °C |
| IR (Nujol) : | 2250 (NCO); 1760; 1720; 1690 (Carbonylbanden) $cm^{-1}$ |

Beispiel 3 (Herstellungsbeispiel)

N-(6-Isocyanato-caproyl)-carbamidsäure-β-methoxyethylester

In 25 ml Toluol werden 8,8 g (50 mmol) 6-Isocyanatocaproylchlorid vorgelegt. Bei 0 °C tropft man eine Mischung von 5,95 g (50 mmol) Carbamidsäure-β-methoxyethylester, 3,96 g (50 mmol) Pyridin und 15 ml Toluol zu. Man rührt 6 Stunden bei 25 °C und erhitzt 10 Stunden auf 60 °C. Das Gemisch wird mit 100 ml Toluol verdünnt und einmal mit 50 ml 0,1 n HCl extrahiert. Man trocknet die organische Phase ($MgSO_4$) filtriert und zeiht das Lösemittel ab. Man erhält 5,1 g Produkt, das in seinen Eigenschaften dem Produkt aus Beispiel 2 entspricht.

Ausbeute: 5,1 g = 40 %.

Beispiel 4 (Verwendungsbeispiel)

20,4 g eines verzweigten OH-funktionellen Polyesters aus Terephthalsäure, Neopentylglykol, Hexandiol und Trimethylolpropan (Gewichtsverhältnis der genannten Bausteine in der genannten Reihenfolge 15:8:1,2:1) mit 1,5 % = 18 mmol OH werden mit 2 g (9 mmol) N-(6-Isocyanato-caproyl)-carbamidsäureethylester vermischt und bei 120 °C zu einer homogenen Masse verschmolzen. Das resultierende pulverisierbare Produkt vom Schmelzpunkt 70 °C ist gut löslich in Essigester, Aceton oder Tetrahydrofuran. Nach dem Applizieren als Lösung oder als Pulver und Einbrennen bei 170 °C entsteht eine vernetzte Beschichtung.

Beispiel 5 (Verwendungsbeispiel)

20 g (0,08 mol) N-(6-Isocyanato-caproyl)-carbamidsäureethylester werden mit 6,4 g (0,025 mol) Trischydroxyethylisocyanurat in Gegenwart von 0,5 g Sn-dioctoat bei 70 °C in der Schmelze zur Reaktion gebracht. Das Isocyanatgruppen-freie Produkt hat einen Schmelzpunkt von 50 bis 60 °C. 1 g dieses Produkts wird mit 4 g des OH-funktionellen Polyesters aus Beispiel 4 in Essigester gelöst. Ein aus dieser Lösung gegossener Film wird bei 170 °C 30 Minuten lang eingebrannt, wobei eine vernetzte Beschichtung entsteht.

Beispiel 6 (Verwendungsbeispiel)

19,8 g (0,14 mol) Methacrylsäure-β-hydroxypropylester und 30 g (0,14 mol) N-(6-Isocyanato-caproyl)-carbamidsäureethylester, gelöst in 100 ml Tetrahydrofuran, und 0,5 g Sn-dioctoat werden 2 Stunden lang bei 70 °C gehalten, wobei die NCO-Bande im IR-Spektrum verschwindet. Nach dem Entfernen des Lösungsmittels erhält man ein wachsartiges Produkt, dessen Acrylatfunktion radikalisch polymerisierbar ist, und dessen N-Acylcarbamidsäureestergruppe mit entsprechenden OH-Komponenten analog den Beispielen 4 und 5 vernetzbar ist.

## Patentansprüche

**1.** Isocyanato-acylurethane der allgemeinen Formel I

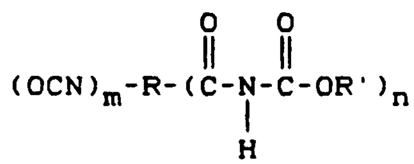

(I),

in der

R für einen jeweils (m und n)-wertigen aliphatischen Kohlenwasserstoffrest mit 1 bis 18 Kohlenstoffatomen, cycloaliphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 13 Kohlenstoffatomen steht,

R′ für einen aliphatischen Kohlenwasserstoffrest, der gegebenenfalls Etherbrücken aufweisen kann, mit 1 bis 18 Kohlenstoffatomen, cycloaliphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 13 Kohlenstoffatomen steht,
und

m und n für gleiche oder verschiedene ganze Zahlen stehen und jeweils 1 oder 2 bedeuten.

**2.** Isocyanato-acrylurethane der in Anspruch 1 genannten allgemeinen Formel I, für welche

R für einen Alkylenrest mit 5 bis 11 Kohlenstoffatomen steht,

R′ für einen Alkylrest mit 1 bis 4 Kohlenstoffatomen oder einen Alkoxyalkylrest mit insgesamt 2 bis 6 Kohlenstoffatomen steht
und

m und n jeweils für 1 stehen.

**3.** Verfahren zur Herstellung von Isocyanato-acylurethanen der in Anspruch 1 genannten Formel I, dadurch gekennzeichnet, daß man Isocyanato-carbonsäurechloride der allgemeinen Formel II

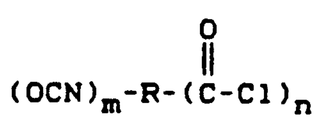

(II),

in der
R, m und n die in Anspruch 1 genannte Bedeutung haben, mit Carbamidsäureestern der allgemeinen Formel III

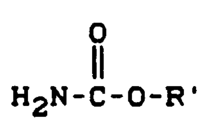

(III),

in der

R′ die in Anspruch 1 genannte Bedeutung hat,

unter Einhaltung eines Molverhältnisses von Säurechloridgruppen zu Carbamidsäureestergruppen von 0,9:1 bis 1,1:1 innerhalb des Temperaturbereichs von 20 bis 140 °C umsetzt.

**4.** Verfahren gemäß Anspruch 3, dadurch gekennzeichnet, daß man als Ausgangsmaterialien der Formeln II und III solche verwendet, für welche R, R′, m und n die in Anspruch 2 genannte Bedeutung haben.

5. Verfahren gemäß Anspruch 3 und 4, dadurch gekennzeichnet, daß man die Umsetzung in Gegenwart einer katalytischen Menge einer Lewis-Säure durchführt.

6. Verfahren gemäß Anspruch 3 und 4, dadurch gekennzeichnet, daß man Umsetzung in Gegenwart einer, dem während der Reaktion abgespaltenen Chlorwasserstoff mindestens äquivalenten, Menge einer Base durchführt.

7. Verwendung der Isocyanato-acylurethane gemäß Anspruch 1 und 2 als Zwischenprodukte zur Herstellung von thermisch vernetzbaren Kunststoffen oder Kunststoff-Vorläufern.

8. Verwendung der Isocyanato-acylurethane gemäß Anspruch 1 und 2 als Zwischenprodukte zur Herstellung von Vernetzungsmitteln für Kunststoffe.

## Claims

1. Isocyanatoacylurethanes corresponding to general formula I

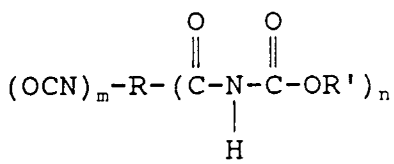

(I)

in which

| | |
|---|---|
| R | is an (m and n)-functional aliphatic hydrocarbon radical containing 1 to 18 carbon atoms, cycloaliphatic hydrocarbon radical containing 4 to 15 carbon atoms, aromatic hydrocarbon radical containing 6 to 15 carbon atoms or araliphatic hydrocarbon radical containing 7 to 13 carbon atoms, |
| R' | is an aliphatic hydrocarbon radical - optionally bearing ether bridges - containing 1 to 18 carbon atoms, cycloaliphatic hydrocarbon radical containing 4 to 15 carbon atoms, aromatic hydrocarbon radical containing 6 to 15 carbon atoms or araliphatic hydrocarbon radical containing 7 to 13 carbon atoms and |
| m and n | are the same or different and represent integers of 1 or 2. |

2. Isocyanatoacylurethanes corresponding to the general formula in claim 1 in which

| | |
|---|---|
| R | is an alkylene radical containing 5 to 11 carbon atoms, |
| R' | is an alkyl radical containing 1 to 4 carbon atoms or an alkoxyalkyl radical containing a total of 2 to 6 carbon atoms and |
| m and n | each stand for 1. |

3. A process for the production of the isocyanatoacylurethanes corresponding to formula I in claim 1, characterized in that isocyanatocarboxylic acid chlorides corresponding to general formula II

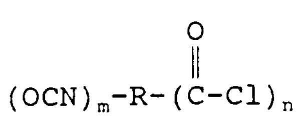

(II)

in which

R, m and n are as defined in claim 1,

are reacted with carbamic acid esters corresponding to general formula III

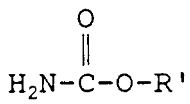

(III)

in which

R' is as defined in claim 1,

at temperatures in the range from 20 to 140 ° C, a molar ratio of acid chloride groups to carbamic acid ester groups of 0.9:1 to 1.1:1 being maintained during the reaction.

**4.** A process as claimed in claim 3, characterized in that starting materials corresponding to formulae II and III in which R, R', m and n are as defined in claim 2 are used.

**5.** A process as claimed in claims 3 and 4, characterized in that the reaction is carried out in the presence of a catalytic quantity of a Lewis acid.

**6.** A process as claimed in claims 3 and 4, characterized in that the reaction is carried out in the presence of a quantity of a base at least equivalent to the hydrogen chloride eliminated during the reaction.

**7.** The use of the isocyanatoacylurethanes claimed in claims 1 and 2 as intermediate products for the production of thermally crosslinkable plastics or plastics precursors.

**8.** The use of the isocyanatoacylurethanes claimed in claims 1 and 2 as intermediate products for the production of crosslinking agents for plastics.

**Revendications**

**1.** Isocyanato-acyluréthannes de formule générale I

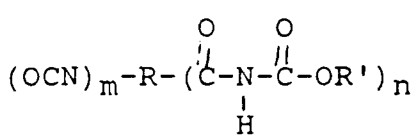

(I)

dans laquelle

R représente un reste d'hydrocarbure aliphatique chaque fois (m et n)-valent avec 1 à 18 atomes de carbone, un reste d'hydrocarbure cycloaliphatique avec 4 à 15 atomes de carbone, un reste d'hydrocarbure aromatique avec 6 à 15 atomes de carbone ou un reste d'hydrocarbure araliphatique avec 7 à 13 atomes de carbone,

R' représente un reste d'hydrocarbure aliphatique pouvant éventuellement présenter des ponts éther et possédant 1 à 18 atomes de carbone, un reste d'hydrocarbure cycloaliphatique avec 4 à 15 atomes de carbone, un reste d'hydrocarbure aromatique avec 6 à 15 atomes de carbone ou un reste d'hydrocarbure araliphatique avec 7 à 13 atomes de carbone,

et

m et n sont des nombres entiers égaux ou différents et signifient chaque fois 1 ou 2.

**2.** Isocyanato-acyluréthannes répondant à la formule I de la revendication 1, dans laquelle:

R représente un reste alkyle avec 5 à 11 atomes de carbone,

R' représente un reste alkyle avec 1 à 4 atomes de carbone ou un reste alcoxyalkyle avec en tout 2 à 6 atomes de carbone

et

m et n signifient chaque fois 1.

3. Procédé pour la fabrication des isocyanato-acyluréthannes répondant à la formule I de la revendication 1, caractérisé en ce que l'on fait réagir des chlorures d'acide isocyanato-carboxylique de formule générale II

$$(OCN)_m-R-(\overset{O}{\overset{\|}{C}}-Cl)_n \qquad (II)$$

dans laquelle
R, m et n ont les significations décrites ci-dessus, avec des esters d'acide carbamique de formule générale III

$$H_2N-\overset{O}{\overset{\|}{C}}-O-R' \qquad (III)$$

dans laquelle
R' possède la signification décrite dans la revendication 1,
en respectant un rapport molaire de 0,9:1 à 1,1:1 entre les groupes chlorure d'acide et les groupes ester d'acide carbamique, dans la gamme de températures de 20 à 140 ° C.

4. Procédé selon la revendication 3, caractérisé en ce que l'on emploie comme substance de départ de formules II et III des substances dans lesquelles R, R', m et n possèdent les significations décrites dans la revendication 2.

5. Procédé selon les revendications 3 et 4, caractérisé en ce qu'on effectue la réaction en présence d'une quantité catalytique d'un acide de Lewis.

6. Procédé selon les revendications 3 et 4, caractérisé en ce que l'on effectue la revendication en présence d'une base en quantité au moins équivalente à l'acide chlorhydrique libéré durant la réaction.

7. Utilisation des isocyanato-acyluréthannes selon les revendication 1 et 2 comme produits intermédiaires pour la fabrication de matières synthétiques ou de précurseurs de matières synthétiques réticulables à chaud.

8. Utilisation des isocyanato-acyluréthannes selon les revendications 1 et 2 comme produits intermédiaires pour la fabrication de réticulants pour matières synthétiques.